(19) **Europäisches Patentamt**
**European Patent Office**
**Office européen des brevets**

(11) **EP 3 731 036 A1**

(12) **EUROPEAN PATENT APPLICATION**

(43) Date of publication:
**28.10.2020 Bulletin 2020/44**

(51) Int Cl.:
**G05B 13/04** *(2006.01)* **G06F 17/11** *(2006.01)*
**G06N 5/00** *(2006.01)*

(21) Application number: **20163831.9**

(22) Date of filing: **18.03.2020**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 JP 2019085334**

</td><td>

(71) Applicant: **FUJITSU LIMITED**
**Kanagawa 211-8588 (JP)**

(72) Inventors:
• **PARIZY, Matthieu**
**Kawasaki-shi, Kanagawa 211-8588 (JP)**
• **MATSUOKA, Hidetoshi**
**Kawasaki-shi, Kanagawa 211-8588 (JP)**

(74) Representative: **Haseltine Lake Kempner LLP**
**138 Cheapside**
**London EC2V 6BJ (GB)**

</td></tr>
</table>

(54) **OPTIMIZATION DEVICE AND CONTROL METHOD FOR OPTIMIZATION DEVICE**

(57) An optimization device includes: an operation unit that executes an annealing operation; a replica history information holding unit that individually holds a temperature corresponding to replica state identification information that identifies a replica state corresponding to an annealing operation of N times previously executed by the operation unit wherein N is a positive integer, a plurality of parameters corresponding to the replica state, and energy corresponding to the replica state; a barycenter calculation unit that individually calculates a barycenter of a plurality of parameters corresponding to each replica state of N times held by the replica history information holding unit, and holds, in a barycenter holding unit, a barycenter of a plurality of parameters corresponding to the each replica state of N times; a barycenter distance determination unit that determines whether or not a barycenter is within a predetermined distance, for each of a plurality of sets of replica states corresponding to a temperature equal to or lower than a predetermined temperature, among a plurality of replica states for which the barycenter holding unit holds a barycenter; a temperature adjustment unit that changes a temperature corresponding to any one of replica states included in a set of replica states determined to have a barycenter within the predetermined distance, to a temperature exceeding the predetermined temperature; and a replica exchange control unit that uses the changed temperature and a plurality of parameters corresponding to a replica state corresponding to the temperature, to cause the operation unit to perform the annealing operation.

FIG. 3

EP 3 731 036 A1

**Description**

FIELD

Embodiments relate to an optimization device and a control method for the optimization device.

BACKGROUND

In recent years, in information processing performed in each of fields, for example, processing for solving an optimization problem for minimizing needed resources, maximizing effects, and the like is performed.

For example, in a discrete optimization problem, a combinational optimization problem, and the like among such optimization problems, there is a case where it is very difficult to calculate a solution since a variable takes a discrete value (a value that is not a continuous value). Specifically, for example, in a discrete optimization problem, there is a case where it is difficult to calculate a solution since there are a large number of solutions (hereinafter, also referred to as local solutions) that are not optimal solutions but take a minimum value in a local neighborhood.

When solving such a discrete optimization problem, for example, there is used an approximate solution method using a property unique to a problem, or a solution method called metaheuristic that does not rely on a property of a problem. Specifically, for example, in metaheuristic, there is used a simulated annealing method in a broad sense that is related to a solution method using the Markov chain Monte Carlo method, and is called an exchange Monte Carlo method or a replica exchange method.

This simulated annealing method is a method of calculating an optimal solution by stochastically changing a state by using random numbers. Then, in the simulated annealing method, it has been proved that the state reaches an optimal solution in a limit where a time (the number of iterations of the annealing operation) becomes infinite when an acceptance (permission) probability of a state transition is determined as in the following Expressions (1) and (2) by using a temperature and an energy change accompanying the state transition. Note that T in the following Expression (1) is a parameter representing a temperature, and it is preferable to take a large initial value in accordance with a problem, and it is preferable to gradually lower the value over time.
[Formula 1]

$$p(\Delta E, T) = f(-\Delta E/T) \qquad \text{Expression (1)}$$

[Formula 2]

$$f_{metro}(x) = min\,(1, e^x) \qquad \text{Expression (2)}$$

As described above, in the simulated annealing method, an optimal solution may be obtained by setting the number of iterations of the annealing operation to infinity. However, in practice, it may not be possible to reliably determine the optimal solution since a solution needs to be obtained with a finite number of iterations. Furthermore, as described above, the temperature may not be sufficiently lowered in a finite time because the temperature is lowered at a very slow pace.

Therefore, in an actual simulated annealing method, the temperature needs to be lowered at a faster pace than a pace of lowering the temperature at which theoretical convergence is guaranteed. Then, in the actual simulated annealing method, iteration of the annealing operation is repeated while lowering the temperature, the operation is ended when a certain number of iterations is reached or when a condition such as energy falls below a predetermined value is satisfied, and a state at the end is outputted as a solution.

Note that, as described above, since the temperature does not become zero with a finite number of iterations, a state occupancy probability follows the Boltzmann distribution and the like even at the end of the operation, and there is a possibility that an optimal solution or a good solution is not to be outputted. Therefore, the actual simulated annealing method adopts, for example, a method of outputting a state with lowest energy among individual states obtained during the iteration, and the like.

As described above, the simulated annealing method has a problem that a calculation time is relatively long because the temperature needs to be gradually lowered. Furthermore, the simulated annealing method has a problem that it is difficult to appropriately adjust the way of lowering the temperature in accordance with the problem. Specifically, for example, when the temperature is lowered too slowly, the temperature is not to be lowered sufficiently within a finite time. Therefore, an energy range of final heat distribution is widened and an occupancy probability of a good solution is not to increase. Whereas, when the temperature is lowered too quickly, the temperature will drop before escape from a local solution. Therefore, even in this case, the occupancy probability of a good solution is not to increase.

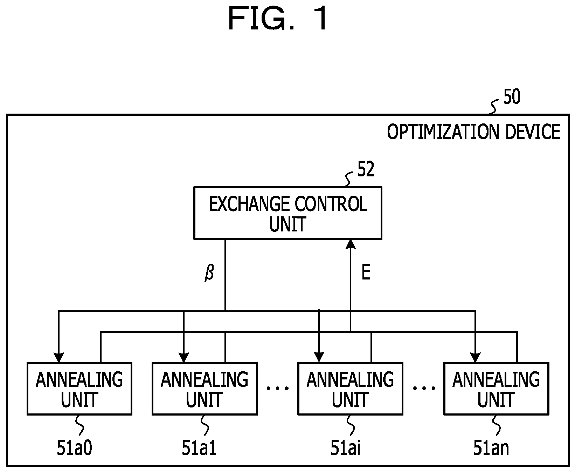

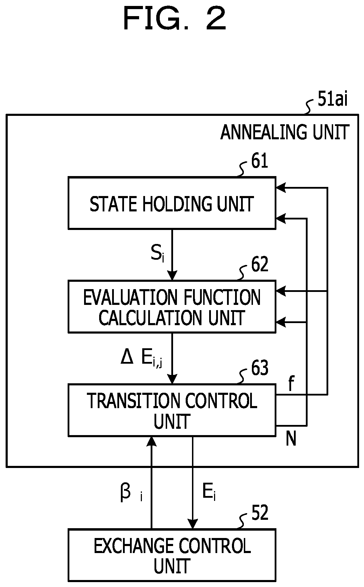

Next, the replica exchange method will be described. FIGs. 1 and 2 are diagrams describing a configuration example of an optimization device 50 using a replica exchange method.

The replica exchange method is a method of simultaneously performing Monte Carlo search (hereinafter also referred to as stochastic search) using multiple temperatures, comparing energy corresponding to each state for every predetermined number of iterations, and performing an operation of exchanging states for two temperatures with an appropriate probability.

In the example illustrated in FIG. 1, the optimization device 50 includes: a plurality of annealing units 51a0, 51a1, ..., 51ai,..., 51an (hereinafter, these are collectively simply referred to as an annealing unit 51); and an exchange control unit 52.

The exchange control unit 52 gives temperature information (hereinafter, also simply referred to as a temperature) to each annealing unit 51. Specifically, for example, the exchange control unit 52 gives an inverse temperature $\beta_i$ ($0 \le i \le n$), for example, which is a reciprocal of T, to each annealing unit 51.

Whereas, as illustrated in FIG. 2, the annealing unit 51ai includes a state holding unit 61, an evaluation function calculation unit 62, and a transition control unit 63. Note that a configuration of other annealing units 51 is similar to that of the annealing unit 51ai, and a description thereof will be omitted.

The state holding unit 61 holds a state $S_i$ that is a value of a plurality of state variables (hereinafter, also referred to as parameters) included in an evaluation function. Then, the state holding unit 61 updates the state $S_i$, on the basis of a flag f indicating propriety of change in the state variable (hereinafter, also referred to as a state transition) and a number N of a state variable corresponding to the flag f.

The evaluation function calculation unit 62 calculates an energy change accompanying the state transition. Specifically, for example, when the evaluation function is represented by an Ising model represented by coupling between two state variables, and allows only a state transition corresponding to one state change at a time, the evaluation function calculation unit 62 calculates an energy change $\Delta E_{i,j}$ accompanying a state transition corresponding to each of the plurality of state variables, on the basis of a value of each state variable, a coupling coefficient indicating a strength of coupling between the state variables, the number N, and the flag f. The energy change $\Delta E_{i,j}$ indicates an energy change accompanying a state transition corresponding to a state variable of a j-th annealing unit 51.

Note that a value of the coupling coefficient according to the optimization problem to be calculated may be, for example, a value previously stored in a memory, a register, and the like. Furthermore, the evaluation function calculation unit 62 may be realized with use of a logic circuit such as a product-sum operation circuit, for example.

Similarly to the simulated annealing method, the transition control unit 63 performs stochastic search by determining an acceptance probability of a state transition corresponding to a state variable of the j-th annealing unit 51, by substituting the energy change $\Delta E_{i,j}$ and the inverse temperature $\beta_i$ assigned by the exchange control unit 52 into the following Expression (3). Note that, in the following Expression (3), a function f is the same as that in Expression (1), and for example, the function f in the metropolis method of Expression (2) is used.

[Formula 3]

$$p\left(\Delta E_{i,j}, \beta_i\right) = f\left(-\beta_i \Delta E_{i,j}\right) \qquad \text{Expression (3)}$$

Then, the transition control unit 63 outputs the flag f and the number N on the basis of the acceptance probability of the state transition calculated by Expression (3). Moreover, the transition control unit 63 updates and outputs energy $E_i$ on the basis of the energy change $\Delta E_{i,j}$.

Whereas, the exchange control unit 52 observes the energy E in each annealing unit 51 every time the annealing operation is iterated for a certain number of times in each annealing unit 51, and calculates an exchange probability represented by the following Expression (4) by using the energy E and an inverse temperature $\beta$ in two of the annealing units 51. Then, the exchange control unit 52 exchanges the values of the individual state variables in the two annealing units 51 on the basis of the calculated exchange probability. In this case, the exchange control unit 52 may exchange the inverse temperature $\beta$ given to each of the two annealing units 51 instead of the value of the state variable.

Note that, in the following Expression (4), $\beta_i$ is the inverse temperature given to the annealing unit 51ai, $\beta_j$ is the inverse temperature given to the j-th annealing unit 51, $E_i$ is the energy in the annealing unit 51ai, and $E_j$ is the energy in the j-th annealing unit 51. Furthermore, in Expression (4), a function f is the same as that in Expression (1), and for example, the function f in the metropolis method of Expression (2) is used.

[Formula 4]

$$p_{ij} = f\left((\beta_i - \beta_j)(E_i - E_j)\right)$$

Expression (4)

Even when such exchange is performed, probability distribution for a state of each temperature converges to a Boltzmann distribution for each temperature. Then, a relaxation time needed for convergence of the probability distribution is significantly shorter than a case where no exchange is performed.

Note that, for the two annealing units 51 to be exchanged, it is desirable to select two annealing units 51 given with close temperatures (for example, two annealing units 51 given with adjacent temperatures) so as to avoid a too small exchange probability (for example, see Patent Documents 1 to 3).

Japanese Laid-open Patent Publication No. 2004-244721, Japanese Laid-open Patent Publication No. 2002-217902, and Japanese National Publication of International Patent Application No. 2016-519857 are disclosed as related art.

Here, in the optimization device 50 using the replica exchange method as described above, a region corresponding to a same local solution may be searched in the plurality of annealing units 51 (for example, a plurality of annealing units 51 given with a low temperature) . Therefore, the optimization device 50 may not efficiently search for the optimal solution.

Thus, in one aspect, an object of embodiments is to provide an optimization device and a control method for the optimization device that enable efficient search for an optimal solution.

SUMMARY

According to an aspect of the embodiments, an optimization device includes: an operation unit that executes an annealing operation; a replica history information holding unit that individually holds a temperature corresponding to replica state identification information that identifies a replica state corresponding to an annealing operation of N times previously executed by the operation unit wherein N is a positive integer, a plurality of parameters corresponding to the replica state, and energy corresponding to the replica state; a barycenter calculation unit that individually calculates a barycenter of a plurality of parameters corresponding to each replica state of N times held by the replica history information holding unit, and holds, in a barycenter holding unit, a barycenter of a plurality of parameters corresponding to the each replica state of N times; a barycenter distance determination unit that determines whether or not a barycenter is within a predetermined distance, for each of a plurality of sets of replica states corresponding to a temperature equal to or lower than a predetermined temperature, among a plurality of replica states for which the barycenter holding unit holds a barycenter; a temperature adjustment unit that changes a temperature corresponding to any one of replica states included in a set of replica states determined to have a barycenter within the predetermined distance, to a temperature exceeding the predetermined temperature; and a replica exchange control unit that uses the changed temperature and a plurality of parameters corresponding to a replica state corresponding to the temperature, to cause the operation unit to perform the annealing operation.

According to one aspect, it is possible to efficiently search for an optimal solution.

BRIEF DESCRIPTION OF DRAWINGS

FIG. 1 is a diagram describing a configuration example of an optimization device 50 using a replica exchange method;
FIG. 2 is a diagram describing a configuration example of the optimization device 50 using the replica exchange method;
FIG. 3 is a diagram illustrating a configuration example of an optimization device 10 according to a first embodiment;
FIG. 4 is a diagram illustrating a configuration example of the optimization device 10 according to the first embodiment;
FIG. 5 is a flowchart describing an operation of the optimization device 10;
FIG. 6 is a flowchart describing an operation of the optimization device 10;
FIG. 7 is a flowchart describing an operation of the optimization device 10;
FIG. 8 is a flowchart describing an operation of the optimization device 10;
FIG. 9 is a flowchart describing an operation of the optimization device 10;
FIG. 10 is a flowchart describing an operation of the optimization device 10;
FIG. 11 is a flowchart describing an operation of the optimization device 10;
FIG. 12 is a flowchart describing an operation of the optimization device 10;
FIG. 13 is a flowchart describing an operation of the optimization device 10;

FIG. 14 is a table describing a specific example of history information 131;

FIG. 15 is a table describing a specific example of barycenter information 132;

FIG. 16 is a table describing a specific example of the barycenter information 132;

FIG. 17 is a table describing a specific example of low-temperature information 133;

FIG. 18 is a table describing a specific example of adjustment information 134; and

FIGs. 19A and 19B are graphs describing a specific example of an operation of the optimization device 10.

DESCRIPTION OF EMBODIMENTS

[First Embodiment]

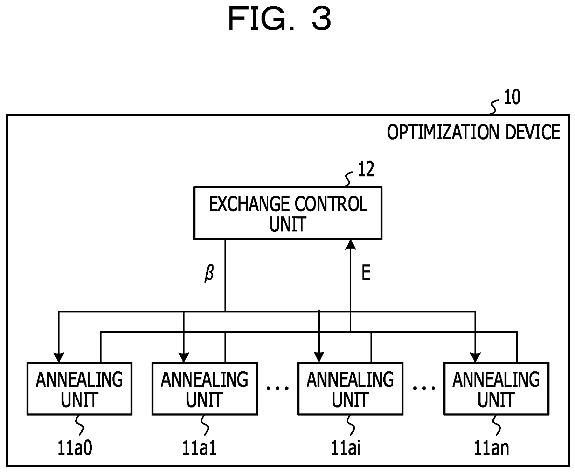

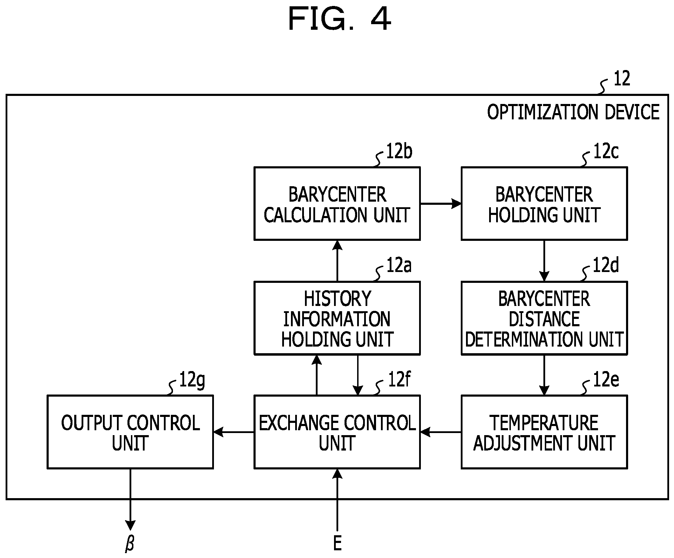

First, an optimization device 10 according to a first embodiment will be described. FIGs. 3 and 4 are diagrams illustrating a configuration example of the optimization device 10 according to the first embodiment.

As illustrated in FIG. 3, the optimization device 10 according to the first embodiment includes annealing units 11a0, 11a1,..., 11ai,..., 11an (hereinafter, these are collectively simply referred to as an annealing unit 11)), and an exchange control unit 12 (hereinafter, also referred to as a replica exchange control unit 12).

Each of the annealing units 11 is the same as the annealing unit 51ai described in FIG. 2. In other words, for example, when a state transition occurs in which any of a plurality of state variables changes, each of the annealing units 11 calculates a change in energy E accompanying the change in the value of the plurality of state variables. Then, each of the annealing units 11 performs a stochastic search by stochastically determining a value for accepting the change from among the values of the plurality of state variables, on the basis of the change in the energy E and the temperature. Note that, for example, mutually different temperatures are assigned to the individual annealing units 11.

As illustrated in FIG. 4, the exchange control unit 12 includes a history information holding unit 12a, a barycenter calculation circuit 12b (hereinafter, also referred to as a barycenter calculation unit 12b), a barycenter holding unit 12c, a barycenter distance determination circuit 12d (hereinafter, also referred to as a barycenter distance determination unit 12d), a temperature adjustment circuit 12e (hereinafter, a temperature adjustment unit 12e), an exchange operation circuit 12f (hereinafter, also referred to as an exchange operation unit 12f), and an output control circuit 12g (hereinafter, also referred to as an output control unit 12g).

The history information holding unit 12a holds history information 131 (hereinafter, also referred to as replica history information 131). The history information 131 is information including: a temperature corresponding to replica state identification information (hereinafter, also referred to as a replica number) identifying a replica state of each annealing unit 11; a plurality of parameters corresponding to the replica state of each annealing unit 11; and the energy E corresponding to the replica state of each annealing unit 11.

The barycenter calculation unit 12b individually calculates a barycenter (hereinafter also referred to as barycenter information 132) of a plurality of parameters corresponding to each replica state of N times held by the history information holding unit 12a. In other words, for example, the barycenter calculation unit 12b calculates a barycenter of a plurality of parameters for each replica state of each annealing unit 11. Then, the barycenter holding unit 12c holds the barycenter information 132 calculated by the barycenter calculation unit 12b.

The barycenter distance determination unit 12d determines whether or not the barycenter is within a predetermined distance, for each of a plurality of sets of replica states (hereinafter also referred to as low-temperature replica states) corresponding to a temperature equal to or lower than a predetermined temperature, among a plurality of replica states for which the barycenter holding unit 12c holds the barycenter information 132.

The temperature adjustment unit 12e changes a temperature corresponding to any one of replica states included in a set of replica states determined to have the barycenter within the predetermined distance (hereinafter, also simply referred to as a set of replica states), to a temperature exceeding a predetermined temperature.

Specifically, for example, the temperature adjustment unit 12e exchanges a temperature corresponding to any one of replica states included in the set of replica states, for example, with a temperature of a replica state that is not included in the set of replica states, among a plurality of replica states for which the barycenter holding unit 12c holds the barycenter information 132.

Furthermore, the temperature adjustment unit 12e raises, for example, a temperature corresponding to any one of replica states included in the set of replica states, until the barycenter of individual replica states included in the set of replica states exceeds a predetermined distance.

The exchange operation unit 12f exchanges a temperature (including a temperature changed by the temperature adjustment unit 12e) corresponding to the replica state of each annealing unit 11.

Specifically, for example, from the temperature and the energy E corresponding to each of two annealing units 11 that are candidates for exchanging the temperature (hereinafter, also simply referred to as two annealing units 11), the exchange operation unit 12f calculates an exchange probability $p_{ij}$ of the temperatures corresponding to the replica states of the two annealing units 11 (the exchange probability $p_{ij}$ described in Expression (3) described above). Then, the exchange operation unit 12f determines whether or not to exchange the temperatures corresponding to the replica states of the two annealing units 11, for example, on the basis of a comparison result between the calculated exchange probability $p_{ij}$ and a random number.

The output control unit 12g gives, to each annealing unit 11, a temperature (including the temperature exchanged by the exchange operation unit 12f) corresponding to the replica state of each annealing unit 11. Then, each annealing unit 11 performs an annealing operation by using the temperature given by the output control unit 12g and using a plurality of parameters corresponding to the replica state of each annealing unit 11.

Note that the history information holding unit 12a and the barycenter holding unit 12c may be, for example, storage circuits such as registers. Furthermore, the history information holding unit 12a and the barycenter holding unit 12c may be a volatile memory such as a random access memory (RAM), or a non-volatile memory such as a flash memory or an electrically erasable programmable read only memory (EEPROM).

[Operation of optimization device]

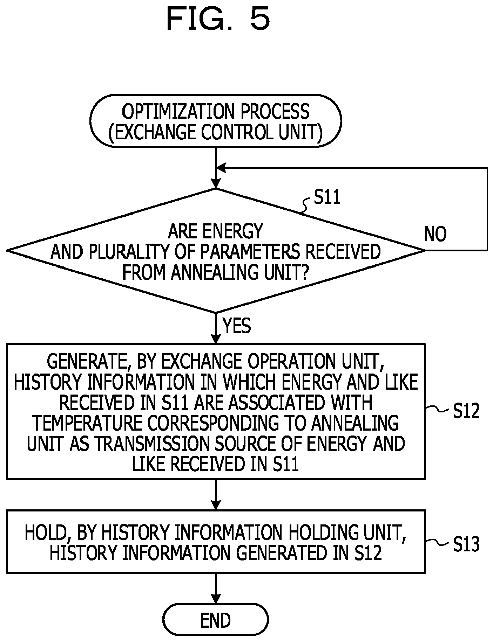

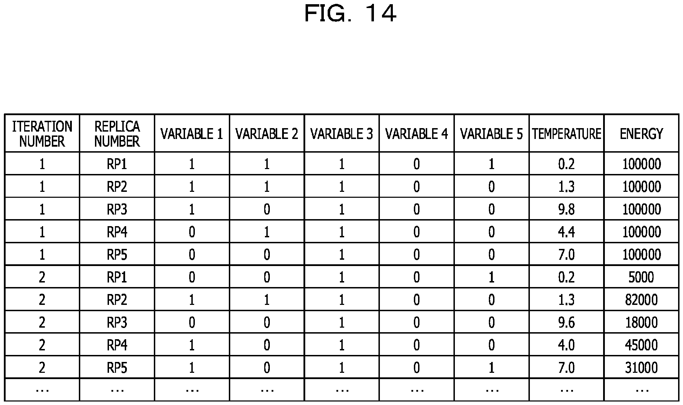

Next, an operation of the optimization device 10 will be described. FIGs. 5 to 13 are flowcharts describing an operation of the optimization device 10. Specifically, for example, FIGs. 5 to 13 are flowcharts describing an operation of the exchange control unit 12. Furthermore, FIGs. 14 to 18 are tables describing an operation of the optimization device 10.

As illustrated in FIG. 5, the exchange operation unit 12f of the exchange control unit 12 waits until the energy E and a plurality of parameters are received from each annealing unit 11 (NO in S11). Specifically, for example, the exchange control unit 12 waits until the energy E and the plurality of parameters are transmitted in accordance with the fact that each annealing unit 11 performs an annealing operation.

Then, when the energy E and the plurality of parameters are received from each annealing unit 11 (YES in S11), the exchange operation unit 12f generates the history information 131 in which the energy and the plurality of parameters received in S11 are associated with a temperature given to the annealing unit 11 as the transmission source of the energy and the plurality of parameters received in S11 (S12).

Thereafter, the history information holding unit 12a of the exchange control unit 12 holds the history information 131 generated in S12 (S13). Specifically, for example, the history information holding unit 12a individually holds the history information 131 for every annealing unit 11 and for every annealing operation. Hereinafter, a specific example of the history information 131 held by the history information holding unit 12a will be described.

[Specific example of history information]

FIG. 14 is a table describing a specific example of the history information 131. Note that, hereinafter, a description will be made assuming that the number of the annealing units 11 (the number of replicas) in the optimization device 10 is five. Furthermore, the description will be made assuming that the number of parameters corresponding to the replica state of each annealing unit 11 is five.

The history information 131 illustrated in FIG. 14 has, as items, "iteration number" that stores the number of iterations of the annealing operation in each annealing unit 11, and "replica number" that stores a replica number corresponding to each annealing unit 11. Furthermore, the history information 131 illustrated in FIG. 14 has, as items, each of "variable 1", "variable 2", "variable 3", "variable 4", and "variable 5" that individually stores a value of a parameter (variable) corresponding to each annealing unit 11. Moreover, the history information 131 illustrated in FIG. 14 has, as items, "temperature" that stores a temperature given to each annealing unit 11, and "energy" that stores the energy E corresponding to each annealing unit 11.

Specifically, for example, the history information 131 illustrated in FIG. 14 stores, in information on the first line, "1" as "iteration number", "RP1" as "replica number", "1" as "variable 1", "1" as "variable 2", "1" as "variable 3", "0" as "variable 4", and "1" as "variable 5". Then, the history information 131 illustrated in FIG. 14 stores "0.2" as "temperature" and "100000" as "energy", in the information on the first line.

Furthermore, the history information 131 illustrated in FIG. 14 stores, in information on the second line, "1" as "iteration number", "RP2" as "replica number", "1" as "variable 1", "1" as "variable 2", "1" as "variable 3", "0" as "variable 4", and "0" as "variable 5". Then, the history information 131 illustrated in FIG. 14 stores "1.3" as "temperature" and "100000" as "energy", in the information on the second line. A description for other information included in FIG. 14 is omitted.

Note that, hereinafter, the annealing unit 11 corresponding to information whose "replica number" is "RP1", "RP2", "RP3", "RP4", and "RP5" will be also respectively referred to as a replica RP1, a replica RP2, a replica RP3, a replica RP4, and a replica RP5.

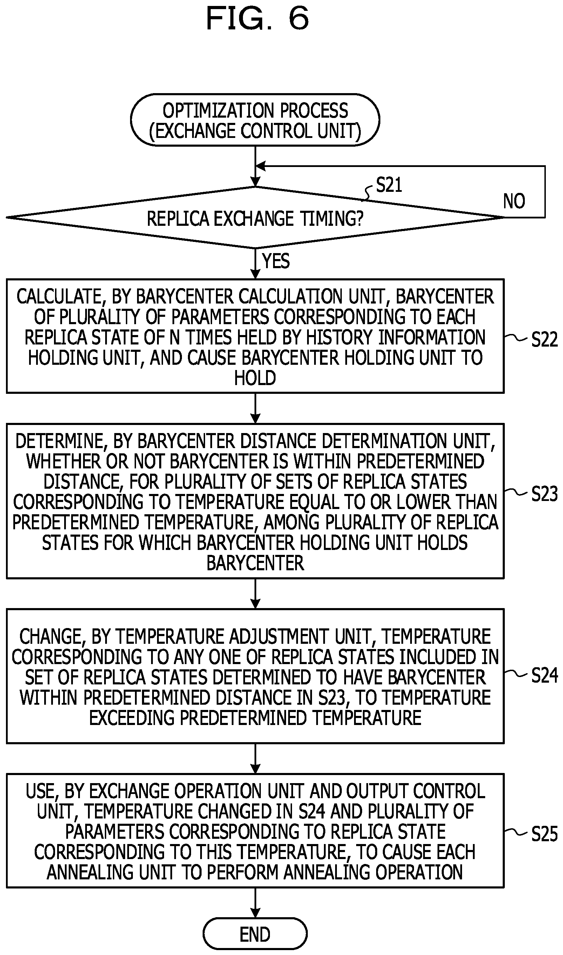

Returning to FIG. 6, the exchange control unit 12 waits until a replica exchange timing comes, in parallel with the operation described in FIG. 5 (NO in S21). The replica exchange timing may be, for example, a timing at which the number of iterations of the annealing operation in each annealing unit 11 has reached a constant multiple of N times. In other words, for example, the exchange control unit 12 may perform the operation in and after S21 by using the history information 131 corresponding to the annealing operation of N times performed immediately before, every time the number of iterations of the annealing operation in each annealing unit 11 reaches N times. Note that N times in the present embodiment may be, for example, the number of times previously inputted by a user and the like.

Then, when the replica exchange timing comes (YES in S21), the barycenter calculation unit 12b of the exchange control unit 12 calculates the barycenter information 132 of a plurality of parameters corresponding to each replica state of N times held by the history information holding unit 12a, and causes the barycenter holding unit 12c to hold the barycenter information 132 (S22). Hereinafter, details of S22 will be described.

[Details of S22]

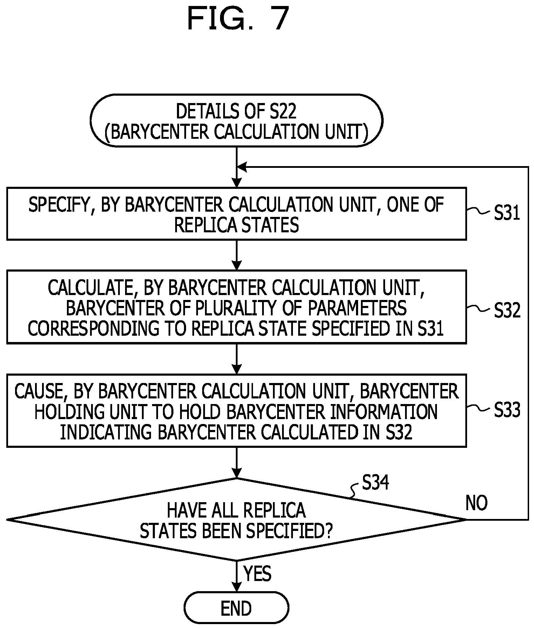

FIG. 7 is a flowchart describing details of S22.

As illustrated in FIG. 7, the barycenter calculation unit 12b specifies one of the replica states of the individual annealing units 11 (S31).

Specifically, for example, "RP1", "RP2", "RP3", "RP4", and "RP5" are individually stored in "replica number" of the history information 131 described with reference to FIG. 14. Therefore, the barycenter calculation unit 12b refers to the history information 131 described in FIG. 14, and specifies a replica state corresponding to the replica RP1, for example.

Then, the barycenter calculation unit 12b calculates a barycenter of a plurality of parameters corresponding to the replica state specified in S31 (S32).

Specifically, for example, the barycenter calculation unit 12b refers to the history information 131 described with reference to FIG. 14, and calculates an average of values stored in "variable 1" of information whose "replica number" is "RP1", as the barycenter of variable 1. Similarly, the barycenter calculation unit 12b individually calculates a barycenter of "variable 2", a barycenter of "variable 3", a barycenter of "variable 4", and a barycenter of "variable 5".

Thereafter, the barycenter calculation unit 12b causes the barycenter holding unit to hold the barycenter information 132 indicating the barycenter calculated in S32 (S33). Hereinafter, a specific example of the barycenter information 132 will be described.

[Specific example of barycenter information (1)]

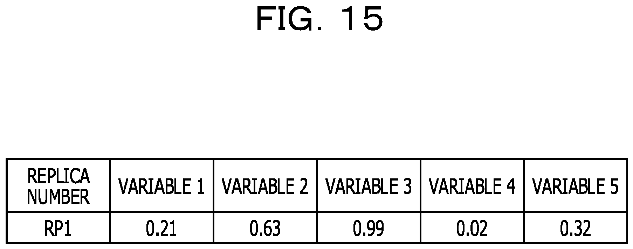

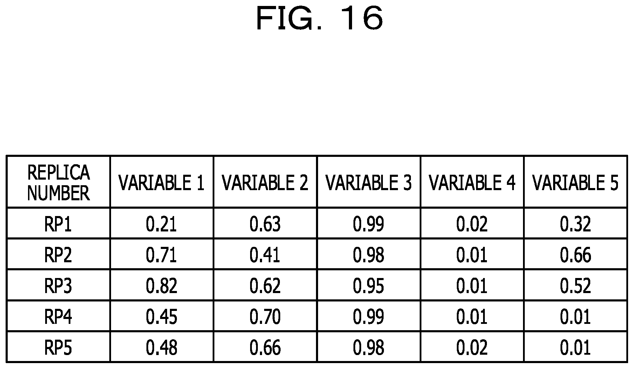

FIGs. 15 and 16 are tables describing a specific example of the barycenter information 132. Specifically, for example, FIG. 15 is a table describing a specific example of the barycenter information 132 when S31 to S33 are performed for the first time.

The barycenter information 132 illustrated in FIG. 15 and the like has, as items, "replica number" that stores a replica number corresponding to each annealing unit 11, and each of "variable 1", "variable 2", "variable 3", "variable 4", and "variable 5" that individually stores a value of a parameter (variable) corresponding to each annealing unit 11.

Specifically, for example, when "0.21", "0.63", "0.99", "0.02", and "0.32" are respectively calculated as the barycenters of "variable 1", "variable 2", "variable 3", "variable 4", and "variable 5" corresponding to the replica RP1, the barycenter holding unit 12c individually holds, as illustrated in FIG. 15, "0.21", "0.63", "0.99", "0.02", and "0.32" as values respectively corresponding to "variable 1", "variable 2", "variable 3", "variable 4", and "variable 5" of information whose "replica number" is "RP1".

Returning to FIG. 7, the barycenter calculation unit 12b determines whether or not all replica states have been specified in S31 (S34) .

As a result, when it is determined that not all replica states have been specified (NO in S34), the barycenter calculation unit 12b performs S31 and subsequent steps again.

Whereas, when it is determined that all the replica states have been specified (YES in S34), the barycenter calculation unit 12b ends S22. Note that, in this case, the barycenter holding unit 12c individually holds the barycenter information 132 corresponding to all replica numbers, as illustrated in FIG. 16.

Returning to FIG. 6, the barycenter distance determination unit 12d of the optimization device 10 determines whether or not the barycenter is within a predetermined distance, for a plurality of sets of replica states corresponding to a temperature equal to or lower than a predetermined temperature, among the plurality of replica states for which the barycenter holding unit 12c holds the barycenter (S23). Hereinafter, details of S23 will be described.

[Details of S23]

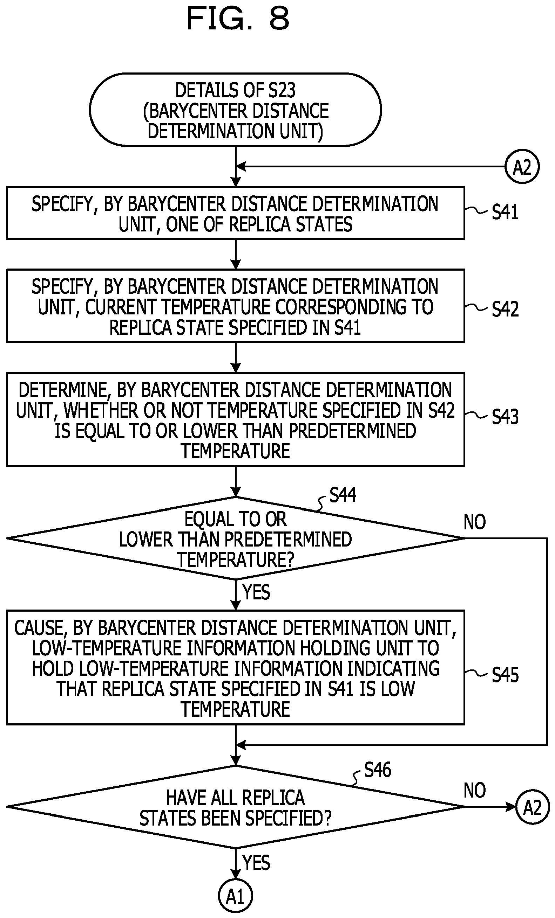

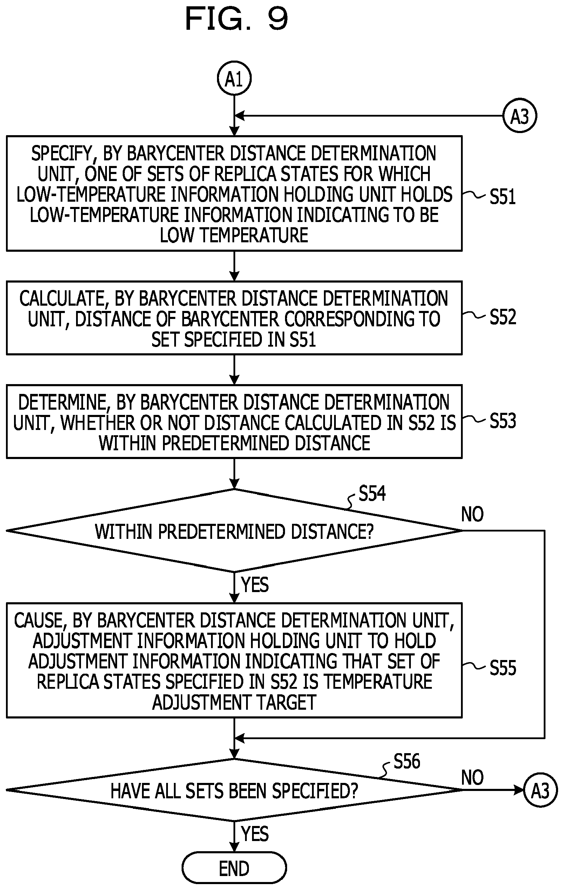

FIGs. 8 and 9 are flowcharts describing details of S23.

As illustrated in FIG. 8, the barycenter distance determination unit 12d specifies one of the replica states of individual annealing units 11 (S41).

Specifically, for example, "RP1", "RP2", "RP3", "RP4", and "RP5" are individually stored in "replica number" of the history information 131 described with reference to FIG. 14. Therefore, the barycenter distance determination unit 12d refers to the history information 131 described in FIG. 14, and specifies a replica state corresponding to the replica RP1, for example.

Then, the barycenter distance determination unit 12d specifies a current temperature corresponding to the replica state specified in S41 (S42).

Specifically, for example, the barycenter distance determination unit 12d refers to the history information 131 described in FIG. 14, and specifies a value stored in "temperature" of information most recently received from the annealing unit 11 corresponding to the replica state specified in S41, in information whose "replica number" is "RP1".

Subsequently, the barycenter distance determination unit 12d determines whether or not the temperature specified in S42 is equal to or lower than a predetermined temperature (S43).

As a result, when it is determined that the temperature specified in S42 is equal to or lower than the predetermined temperature (YES in S44), the barycenter distance determination unit 12d causes a low-temperature information holding unit (not illustrated) to hold the low-temperature information 133 indicating that the replica state specified in S41 is low temperature (S45).

Note that the low-temperature information holding unit may be a storage circuit such as a register, similarly to the history information holding unit 12a and the like. Furthermore, the low-temperature information holding unit may be a volatile memory such as a RAM, or a nonvolatile memory such as a flash memory or an EEPROM.

Whereas, when it is determined that the temperature specified in S42 is not equal to or lower than the predetermined temperature (NO in S44), the barycenter distance determination unit 12d does not perform S45.

Thereafter, the barycenter distance determination unit 12d determines whether or not all replica states have been specified in S41 (S46).

As a result, when it is determined that not all replica states have been specified (NO in S46), the barycenter distance determination unit 12d performs S41 and subsequent steps again.

Whereas, when it is determined that all replica states have been specified (YES in S46), the barycenter distance determination unit 12d performs S51 and subsequent steps as illustrated in FIG. 9. Hereinafter, a specific example of the low-temperature information 133 will be described.

[Specific example of low-temperature information]

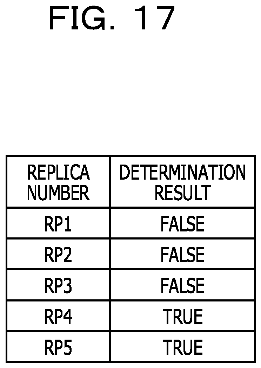

FIG. 17 is a table describing a specific example of the low-temperature information 133. Specifically, for example, FIG. 17 is a table describing a specific example of the low-temperature information 133 when it is determined in S46 that all replica states have been specified.

The low-temperature information 133 illustrated in FIG. 17 has, as items, "replica number" that stores a replica number corresponding to each annealing unit 11, and "determination result" that stores information indicating whether or not a replica state corresponding to each annealing unit 11 is low temperature. The "determination result" stores "TRUE" indicating that the replica state is low temperature or "FALSE" indicating that the replica state is not low temperature.

Specifically, for example, the low-temperature information 133 illustrated in FIG. 17 stores "RP1" as "replica number" and "FALSE" as "determination result" in information on the first line.

Furthermore, the low-temperature information 133 illustrated in FIG. 17 stores "RP2" as "replica number" and "FALSE" as "determination result" in information on the second line. A description for other information included in FIG. 17 is omitted.

Returning to FIG. 9, the barycenter distance determination unit 12d specifies one of sets of replica states for which the low-temperature information holding unit holds the low-temperature information 133 indicating to be low temperature (S51).

Specifically, for example, the low-temperature information 133 described with reference to FIG. 17 individually stores "TRUE" as "determination result" of information whose "replica number" is "RP4" and "RP5". Therefore, for example, the barycenter distance determination unit 12d refers to the low-temperature information 133 described with reference to FIG. 17, and specifies a set of a replica state corresponding to the replica RP4 and a replica state corresponding to the replica RP5.

Then, the barycenter distance determination unit 12d calculates a distance of the barycenter corresponding to the set specified in S51 (S52) .

Specifically, for example, the barycenter distance determination unit 12d refers to the barycenter information 132 held by the barycenter holding unit 12c, for, example, and calculates a distance of the barycenter corresponding to the set specified in S51 by using the following Expression (5) or Expression (6). Note that, in the following Expressions (5) and (6), m is the number of parameters, i and j are replica numbers each corresponding to the set specified in S51, x is a parameter number, $R_iG_x$ is a value of a barycenter in an x-th parameter of an i-th replica, and $R_jG_x$ is a value of a barycenter in an x-th parameter of a j-th replica.

[Formula 5]

$$\frac{\sum_{x=0}^{m}\left|R_iG_x - R_jG_x\right|}{m}$$

Expression (5)

[Formula 6]

$$\sqrt{\sum_{x=0}^{m}\left(R_iG_x - R_jG_x\right)^2}$$

Expression (6)

Subsequently, the barycenter distance determination unit 12d determines whether or not the distance calculated in S52 is within a predetermined distance (S53).

As a result, when it is determined that the distance calculated in S52 is within a predetermined distance (YES in S54), the barycenter distance determination unit 12d causes an adjustment information holding unit (not illustrated) to hold adjustment information 134 indicating that the set of replica states specified in S52 is a temperature adjustment target (S55).

Note that the adjustment information holding unit may be a storage circuit such as a register, similarly to the history information holding unit 12a and the like. Furthermore, the adjustment information holding unit may be a volatile memory such as a RAM, or a nonvolatile memory such as a flash memory or an EEPROM.

Whereas, when it is determined that the distance calculated in S52 is not within the predetermined distance (NO in S54), the barycenter distance determination unit 12d does not perform S55.

Thereafter, the barycenter distance determination unit 12d determines whether or not all sets have been specified in S51 (S56).

As a result, when it is determined that not all sets have been specified in S51 (NO in S56), the barycenter distance determination unit 12d performs S51 and subsequent steps.

Whereas, when it is determined that all sets have been specified in S51 (YES in S56), the barycenter distance determination unit 12d ends S23. Hereinafter, a specific example of the adjustment information 134 will be described.

[Specific example of adjustment information]

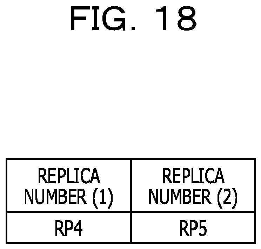

FIG. 18 is a table describing a specific example of the adjustment information 134. Specifically, for example, FIG. 18 is a table describing a specific example of the adjustment information 134 when it is determined in S56 that all sets have been specified.

The adjustment information 134 illustrated in FIG. 18 has, as items, "replica number (1)" that stores one of the replica numbers corresponding to the set determined to be the temperature adjustment target, and "replica number (2)" that stores another one of the replica numbers corresponding to the set determined to be the temperature adjustment target.

Specifically, for example, the adjustment information 134 illustrated in FIG. 18 stores "RP4" as "replica number (1)" and "RP5" as "replica number (2)" in information on the first line.

Returning to FIG. 6, the temperature adjustment unit 12e of the optimization device 10 changes a temperature corresponding to any one of replica states included in the set of replica states determined to have the barycenter within the predetermined distance in S23, to a temperature exceeding the predetermined temperature (S24). Hereinafter, details of S24 will be described.

[Details of S24]

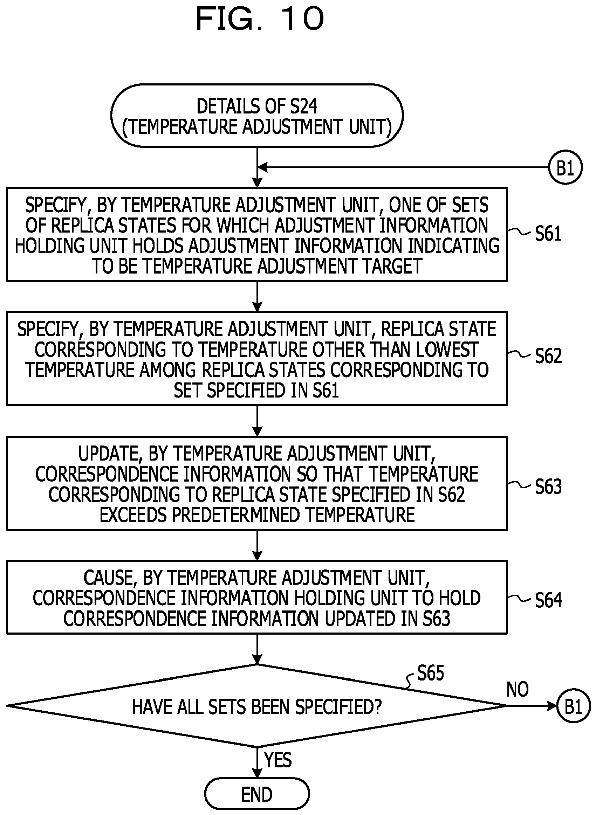

FIG. 10 is a flowchart describing details of S24.

As illustrated in FIG. 10, the temperature adjustment unit 12e specifies one of sets of replica states for which the adjustment information holding unit holds the adjustment information 134 indicating to be the temperature adjustment target (S61).

Specifically, for example, the temperature adjustment unit 12e refers to the adjustment information 134 described in FIG. 18, and specifies a set of the replica state corresponding to the replica RP4 and the replica state corresponding to the replica RP5.

Then, the temperature adjustment unit 12e specifies a replica state corresponding to a temperature other than a lowest temperature among replica states corresponding to the set specified in S61 (S62).

In other words, for example, in the replica state corresponding to the lowest temperature among the replica states corresponding to the set specified in S61, there is a possibility that a ground state is still being searched. Therefore, the temperature adjustment unit 12e specifies, as the temperature adjustment target, a replica state corresponding to a temperature other than the lowest temperature among the replica states corresponding to the set specified in S61.

Specifically, for example, when a current temperature of the replica state corresponding to the annealing unit 11 whose "replica number" is "RP4" is lower than a current temperature of the replica state corresponding to the annealing unit 11 whose "replica number" is "RP5", the temperature adjustment unit 12e specifies the replica state corresponding to the replica RP5.

Subsequently, the temperature adjustment unit 12e updates correspondence information (not illustrated) so that the temperature corresponding to the replica state specified in S62 exceeds the predetermined temperature (S63). The correspondence information is, for example, information in which a replica number corresponding to the replica state of each annealing unit 11 is associated with a temperature given to each annealing unit 11. Therefore, in S63, the temperature adjustment unit 12e updates information indicating the temperature corresponding to the replica state specified in S62 in the information included in the correspondence information.

Moreover, the temperature adjustment unit 12e causes a correspondence information holding unit (not illustrated) to hold the correspondence information updated in S63 (S64).

Note that the correspondence information holding unit may be a storage circuit such as a register, similarly to the history information holding unit 12a and the like. Furthermore, the correspondence information holding unit may be a volatile memory such as a RAM, or a nonvolatile memory such as a flash memory or an EEPROM.

Thereafter, the temperature adjustment unit 12e determines whether or not all sets have been specified in S61 (S65).

As a result, when it is determined that not all sets have been specified in S61 (NO in S65), the temperature adjustment unit 12e performs S61 and subsequent steps.

Whereas, when it is determined that all sets have been specified in S61 (YES in S65), the temperature adjustment unit 12e ends S24.

Note that S22 to S24 described in FIG. 6 and the like may be performed at any timing other than the replica exchange timing.

Returning to FIG. 6, the exchange operation unit 12f and the output control unit 12g of the optimization device 10 use the temperature changed in S24 and a plurality of parameters corresponding to a replica state corresponding to the temperature, to cause each annealing unit 11 to perform an annealing operation (S25). Hereinafter, details of S25 will be described.

[Details of S25]

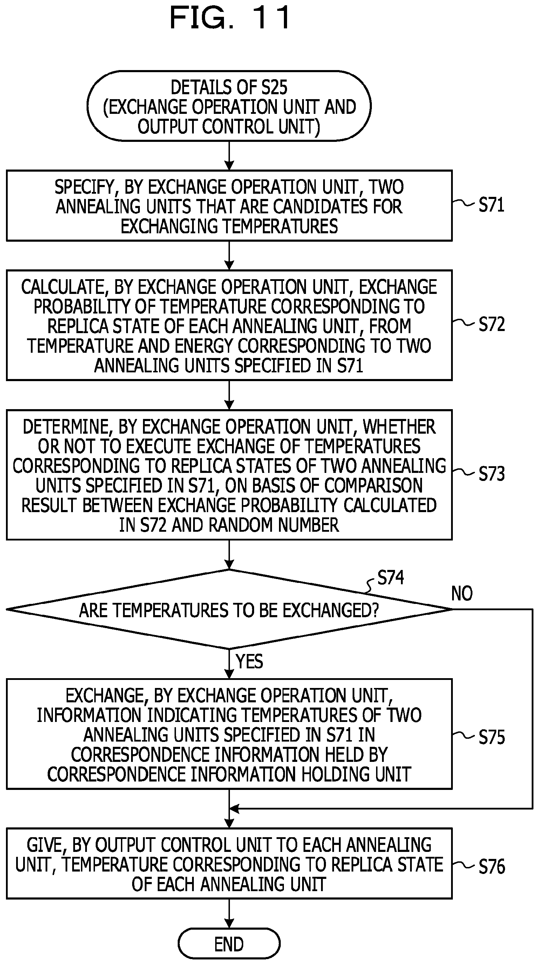

FIG. 11 is a flowchart describing details of S25.

As illustrated in FIG. 11, the exchange operation unit 12f specifies two annealing units 11 that are candidates for exchanging temperatures (S71).

Specifically, for example, the exchange operation unit 12f refers to the correspondence information held by the correspondence information holding unit, and specifies, for example, two annealing units 11 corresponding to adjacent temperatures.

Then, the exchange operation unit 12f calculates an exchange probability $p_{ij}$ (the exchange probability $p_{ij}$ described in Expression (3) described above) of temperatures corresponding to the replica states of the two annealing units 11 specified in S71 (the temperature given to the two annealing units 11), from the temperature and the energy corresponding to each of the two annealing units 11 specified in S71 (S72).

Subsequently, the exchange operation unit 12f determines whether or not to execute exchange of the temperatures corresponding to the replica states of the two annealing units 11 specified in S71, on the basis of a comparison result between the exchange probability $p_{ij}$ calculated in S72 and a random number (S73).

As a result, when executing the exchange of the temperatures corresponding to the replica states of the two annealing units 11 specified in S71 (YES in S74), the exchange operation unit 12f exchanges information indicating the temperatures of the two annealing units 11 specified in S71 in the correspondence information held by the correspondence information holding unit (S75).

Whereas, when not executing the exchange of the temperatures corresponding to the replica states of the two annealing units 11 specified in S71 (NO in S74), the exchange operation unit 12f does not perform S75.

Note that, in S71, the exchange operation unit 12f may specify a plurality of sets of two annealing units 11 from the plurality of annealing units 11 whose information is included in the correspondence information held by the correspondence information holding unit. Then, the exchange operation unit 12f may individually perform S72 to S75 for the every specified set of two annealing units 11.

Thereafter, the output control unit 12g of the exchange control unit 12 gives, to each annealing unit 11, a temperature corresponding to the replica state of each annealing unit 11 (S76).

Specifically, for example, the output control unit 12g refers to the correspondence information held by the correspondence information holding unit, and transmits the temperature corresponding to the replica state of each annealing unit 11, to each annealing unit 11. Then, the exchange operation unit 12f and the output control unit 12g end S25.

In other words, for example, when detecting the presence of a set of low-temperature replica states whose barycenter is within a predetermined distance in the annealing operation in each annealing unit 11, the optimization device 10 in the present embodiment determines that there is a possibility that a region corresponding to a same local solution is searched in a plurality of annealing units 51 corresponding to the detected set. Then, in this case, the optimization device 10 changes one temperature of the detected set of the annealing units 11, to a higher temperature.

This allows the optimization device 10 to suppress searching of the region corresponding to the same local solution in the plurality of annealing units 51. Therefore, the optimization device 10 may efficiently search for the optimal solution.

Note that, in the case of the first embodiment, a replica state whose temperature is to be changed may be specified in another information processing device (not illustrated) provided outside the optimization device 10. In this case, the another information processing device executes a process for specifying the replica state whose temperature is to be changed, for example, by causing a desirable program (not illustrated) and a CPU (not illustrated) to cooperate. Then, in response to receiving an instruction from the another information processing device, the temperature adjustment unit 12e may change a temperature of the replica state corresponding to the received instruction.

Furthermore, in the case of the first embodiment, the replica state whose temperature is to be changed may be specified by causing a CPU (not illustrated) provided in the optimization device 10 and a desirable program (not illustrated) to cooperate and execute a process.

[Second Embodiment]

Next, an optimization device 10 according to a second embodiment will be described. Note that, hereinafter, among operations of the optimization device 10 according to the second embodiment, differences from the operations of the optimization device 10 according to the first embodiment will be described.

[S24 in second embodiment]

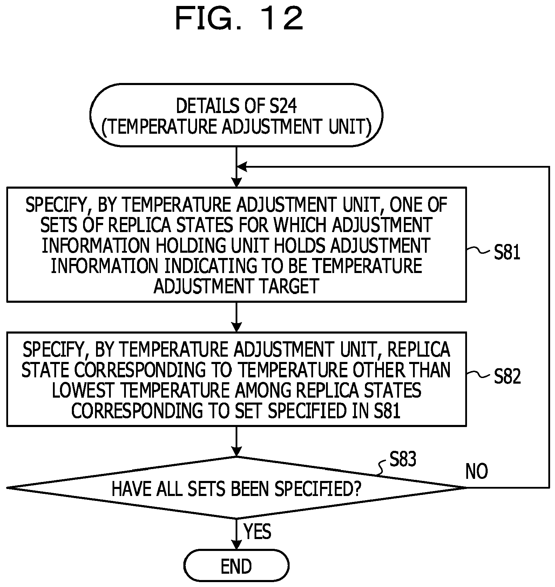

First, S24 in the second embodiment will be described. FIG. 12 is a flowchart describing S24 in the second embodiment.

As illustrated in FIG. 12, similarly to the case of the first embodiment, a temperature adjustment unit 12e specifies one of sets of replica states for which an adjustment information holding unit holds adjustment information 134 indicating to be the temperature adjustment target (S81).

Then, the temperature adjustment unit 12e specifies a replica state corresponding to a temperature other than a lowest temperature among replica states corresponding to the set specified in S81 (S82).

Thereafter, the temperature adjustment unit 12e determines whether or not all sets have been specified in S81 (S83).

As a result, when it is determined that not all sets have been specified in S81 (NO in S83), the temperature adjustment unit 12e performs S81 and subsequent steps.

Whereas, when it is determined that all sets have been specified in S81 (YES in S83), the temperature adjustment unit 12e ends S24.

[S25 in second embodiment]

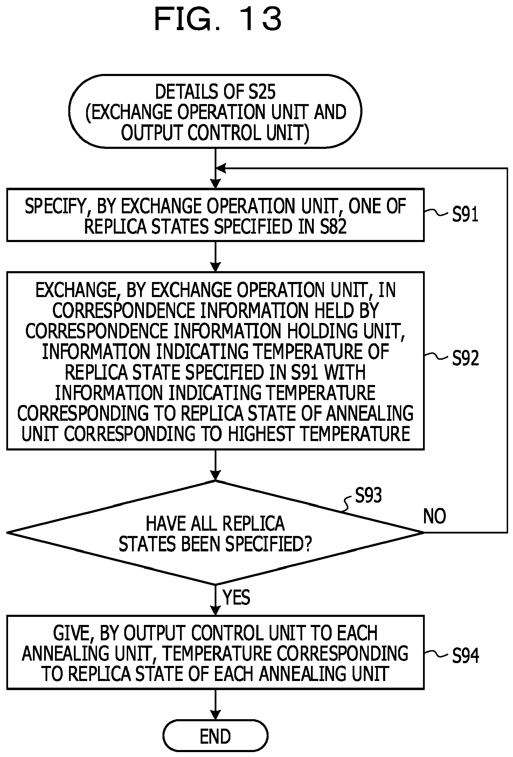

Next, S25 in the second embodiment will be described. FIG. 13 is a flowchart describing S25 in the second embodiment.

The exchange operation unit 12f specifies one of the replica states specified in S82 (S91).

Then, for example, in correspondence information held by the correspondence information holding unit, the exchange operation unit 12f exchanges information indicating a temperature of the replica state specified in S91, with information indicating a temperature corresponding to the replica state of the annealing unit 11 corresponding to a highest temperature (S92).

In other words, for example, the exchange control unit 12 in the second embodiment suppresses searching of a region corresponding to a same local solution in a plurality of annealing units 51, by exchanging the temperature corresponding to the replica state specified in S91 with the temperature corresponding to another replica state with a higher temperature.

Thereafter, the exchange operation unit 12f determines whether or not all replica states have been specified in S91 (S93).

As a result, when it is determined that not all replica states have been specified in S91 (NO in S93), the exchange operation unit 12f performs S91 and subsequent steps.

Whereas, when it is determined that all replica states have been specified in S91 (YES in S93), the output control unit 12g gives, to each annealing unit 11, a temperature corresponding to the replica state of each annealing unit 11 (S76).

Specifically, for example, the output control unit 12g refers to the correspondence information held by the correspondence information holding unit, and transmits the temperature corresponding to the replica state of each annealing unit 11, to each annealing unit 11. Then, the exchange operation unit 12f and the output control unit 12g end S25.

This allows the optimization device 10 to promote the search for the optimal solution in each annealing unit 11 by a method different from that in the case of the first embodiment.

[Specific example of operation of optimization device]

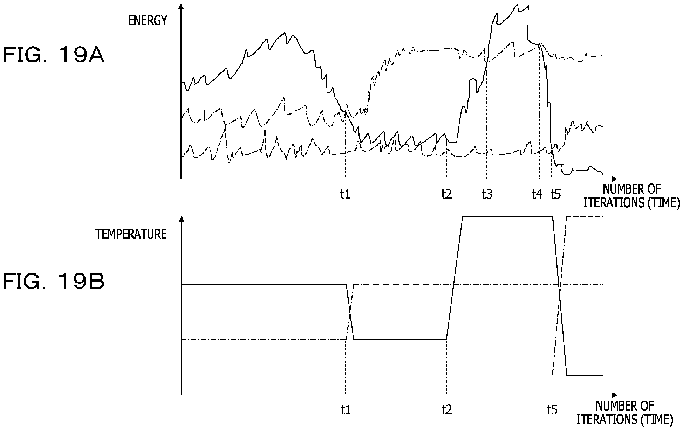

Next, a specific example of an operation of the optimization device 10 will be described. FIGs. 19A and 19B are graphs describing a specific example of an operation of the optimization device 10. Specifically, for example, FIG. 19A is a graph describing a specific example of an operation of the optimization device 10 according to the first embodiment, and is a graph illustrating a change in the energy E accompanying an annealing operation in each of three annealing units 11. Furthermore, FIG. 19B is a graph describing a specific example of an operation of the optimization device 10 according to the first embodiment, and is a graph illustrating a change in temperature accompanying an annealing operation in each of three annealing units 11. Note that, in the example illustrated in FIGs. 19A and 19B, a replica (annealing unit 11) corresponding to a solid line is called a replica A, a replica corresponding to a dashed line is called a replica B, and a replica corresponding to a dotted line is called a replica C.

Specifically, for example, the graph illustrated in FIG. 19A indicates that a magnitude relationship between energy of the replica A and energy of the replica B is switched at time t1, and a magnitude relationship between energy of the replica B and energy of the replica A is switched at time t3. Furthermore, the graph illustrated in FIG. 19A indicates that a magnitude relationship between energy of the replica A and energy of the replica B is switched at time t4, and a magnitude relationship between energy of the replica A and energy of the replica C is switched at time t5.

Then, the graph illustrated in FIG. 19B indicates that temperatures have been exchanged between the replica A and the replica B in accordance with the switching of the magnitude relationship of the energy at time t1 (YES in S74, S75). Furthermore, the graph illustrated in FIG. 19B indicates that temperatures have been exchanged between the replica A and the replica C in accordance with the switching of the magnitude relationship of the energy at time t5 (YES in S74, S75). Whereas, the graph illustrated in FIG. 19B indicates that, at time t3 and time t4, the temperatures have not been exchanged despite the switching of the magnitude relationship of the energy (NO in S74).

Moreover, the graphs illustrated in FIGs. 19A and 19B indicate that, at time t2, a barycenter of the replica A and a barycenter of the replica C have been determined to be within a predetermined distance, so that the temperature of the replica A has been raised (S64).

This allows the optimization device 10 to quickly resolve the situation where a plurality of replicas are searching a region corresponding to the same local solution. Therefore, the optimization device 10 may promote the search for the optimal solution in each annealing unit 11.

**Claims**

1.  An optimization device comprising:

    an operation unit that executes an annealing operation;
    a replica history information holding unit that individually holds a temperature corresponding to replica state identification information that identifies a replica state corresponding to an annealing operation of N times previously executed by the operation unit wherein N is a positive integer, a plurality of parameters corresponding to the replica state, and energy corresponding to the replica state;
    a barycenter calculation unit that individually calculates a barycenter of a plurality of parameters corresponding to each replica state of N times held by the replica history information holding unit, and holds, in a barycenter holding unit, a barycenter of a plurality of parameters corresponding to the each replica state of N times;
a barycenter distance determination unit that determines whether or not a barycenter is within a predetermined distance, for each of a plurality of sets of replica states corresponding to a temperature equal to or lower than a predetermined temperature, among a plurality of replica states for which the barycenter holding unit holds a barycenter;
a temperature adjustment unit that changes a temperature corresponding to any one of replica states included in a set of replica states determined to have a barycenter within the predetermined distance, to a temperature exceeding the predetermined temperature; and
a replica exchange control unit that uses the changed temperature and a plurality of parameters corresponding to a replica state corresponding to the temperature, to cause the operation unit to perform the annealing operation.

2. The optimization device according to claim 1, wherein
the temperature adjustment unit changes a temperature of a replica state corresponding to a temperature other than a lowest temperature among replica states included in a set of replica states determined to have a barycenter within the predetermined distance.

3. The optimization device according to claim 1 or claim 2, wherein
the temperature adjustment unit exchanges a temperature corresponding to any one of replica states included in the set of replica states with a temperature of a replica state other than a replica state included in the set of replica states, among a plurality of replica states for which the barycenter holding unit holds a barycenter.

4. The optimization device according to any of claims 1 to 3, wherein
the temperature adjustment unit exchanges a temperature corresponding to any one of replica states included in the set of replica states with a temperature of a replica state corresponding to a highest temperature, among a plurality of replica states for which the barycenter holding unit holds a barycenter.

5. The optimization device according to any of the preceding claims, wherein
the temperature adjustment unit changes a temperature corresponding to any one of replica states included in the set of replica states to a temperature for which a barycenter of a replica state included in the set of replica states exceeds the predetermined distance.

6. The optimization device according to any of the preceding claims, wherein

the barycenter calculation unit
calculates an average value of a value corresponding to each parameter, for every plurality of parameters corresponding to the each replica state of N times, and
calculates, for the each replica state of N times, a point on a multidimensional space when each of the calculated average value is a coordinate corresponding to each dimension, as a barycenter of a plurality of parameters corresponding to the each replica state of N times.

7. The optimization device according to claim 6, wherein

the barycenter distance determination unit
calculates, for each of the plurality of sets of replica states, a distance between barycenters of the plurality of parameters on the multidimensional space, and
determines, for each of the plurality of sets of replica states, whether or not the calculated distance is within the predetermined distance.

8. A control method for an optimization device, comprising:

executing an annealing operation by an operation unit;
individually holding, by a replica history information holding unit, a temperature corresponding to replica state identification information that identifies a replica state corresponding to an annealing operation of N times previously executed by the operation unit wherein N is a positive integer, a plurality of parameters corresponding to the replica state, and energy corresponding to the replica state;
individually calculating, by a barycenter calculation unit, a barycenter of a plurality of parameters corresponding to each replica state of N times held by the replica history information holding unit, and causing a barycenter holding unit to hold a barycenter of a plurality of parameters corresponding to the each replica state of N times;

determining, by a barycenter distance determination unit, whether or not a barycenter is within a predetermined distance, for each of a plurality of sets of replica states corresponding to a temperature equal to or lower than a predetermined temperature, among a plurality of replica states for which the barycenter holding unit holds a barycenter;

changing, by a temperature adjustment unit, a temperature corresponding to any one of replica states included in a set of replica states determined to have a barycenter within the predetermined distance, to a temperature exceeding the predetermined temperature; and

using, by a replica exchange control unit, the changed temperature and a plurality of parameters corresponding to a replica state corresponding to the temperature, to cause the operation unit to perform the annealing operation.

# FIG. 1

# FIG. 2

ANNEALING UNIT 51ai

STATE HOLDING UNIT 61

$S_i$

EVALUATION FUNCTION CALCULATION UNIT 62

$\Delta E_{i,j}$

TRANSITION CONTROL UNIT 63

f

N

$\beta_i$

$E_i$

EXCHANGE CONTROL UNIT 52

# FIG. 3

# FIG. 4

OPTIMIZATION DEVICE — 12

BARYCENTER CALCULATION UNIT — 12b

BARYCENTER HOLDING UNIT — 12c

HISTORY INFORMATION HOLDING UNIT — 12a

BARYCENTER DISTANCE DETERMINATION UNIT — 12d

OUTPUT CONTROL UNIT — 12g

EXCHANGE CONTROL UNIT — 12f

TEMPERATURE ADJUSTMENT UNIT — 12e

$\beta$

E

# FIG. 5

```
        ┌──────────────────────────┐
        │   OPTIMIZATION PROCESS    │
        │ (EXCHANGE CONTROL UNIT)   │
        └──────────────────────────┘
                    │
                    ▼              ┌──────────┐
              ╱─────────╲  S11     │          │
             ╱  ARE ENERGY ╲  NO   │          │
        ╱ AND PLURALITY OF PARAMETERS RECEIVED ╲──────────┘
             ╲  FROM ANNEALING UNIT?  ╱
              ╲─────────╱
                    │ YES
                    ▼
        ┌──────────────────────────────────┐
        │  GENERATE, BY EXCHANGE OPERATION  │
        │  UNIT, HISTORY INFORMATION IN     │
        │  WHICH ENERGY AND LIKE RECEIVED   │
        │  IN S11 ARE ASSOCIATED WITH       │  S12
        │  TEMPERATURE CORRESPONDING TO     │
        │  ANNEALING UNIT AS TRANSMISSION   │
        │  SOURCE OF ENERGY AND LIKE        │
        │  RECEIVED IN S11                  │
        └──────────────────────────────────┘
                    │
                    ▼
        ┌──────────────────────────────────┐
        │  HOLD, BY HISTORY INFORMATION     │  S13
        │  HOLDING UNIT, HISTORY            │
        │  INFORMATION GENERATED IN S12     │
        └──────────────────────────────────┘
                    │
                    ▼
             ┌─────────────┐
             │     END     │
             └─────────────┘
```

# FIG. 6

```
OPTIMIZATION PROCESS
(EXCHANGE CONTROL UNIT)
```

S21

REPLICA EXCHANGE TIMING? ——— NO

YES

CALCULATE, BY BARYCENTER CALCULATION UNIT, BARYCENTER OF PLURALITY OF PARAMETERS CORRESPONDING TO EACH REPLICA STATE OF N TIMES HELD BY HISTORY INFORMATION HOLDING UNIT, AND CAUSE BARYCENTER HOLDING UNIT TO HOLD — S22

DETERMINE, BY BARYCENTER DISTANCE DETERMINATION UNIT, WHETHER OR NOT BARYCENTER IS WITHIN PREDETERMINED DISTANCE, FOR PLURALITY OF SETS OF REPLICA STATES CORRESPONDING TO TEMPERATURE EQUAL TO OR LOWER THAN PREDETERMINED TEMPERATURE, AMONG PLURALITY OF REPLICA STATES FOR WHICH BARYCENTER HOLDING UNIT HOLDS BARYCENTER — S23

CHANGE, BY TEMPERATURE ADJUSTMENT UNIT, TEMPERATURE CORRESPONDING TO ANY ONE OF REPLICA STATES INCLUDED IN SET OF REPLICA STATES DETERMINED TO HAVE BARYCENTER WITHIN PREDETERMINED DISTANCE IN S23, TO TEMPERATURE EXCEEDING PREDETERMINED TEMPERATURE — S24

USE, BY EXCHANGE OPERATION UNIT AND OUTPUT CONTROL UNIT, TEMPERATURE CHANGED IN S24 AND PLURALITY OF PARAMETERS CORRESPONDING TO REPLICA STATE CORRESPONDING TO THIS TEMPERATURE, TO CAUSE EACH ANNEALING UNIT TO PERFORM ANNEALING OPERATION — S25

END

# FIG. 7

DETAILS OF S22
(BARYCENTER CALCULATION UNIT)

SPECIFY, BY BARYCENTER CALCULATION UNIT, ONE OF REPLICA STATES  ~S31

CALCULATE, BY BARYCENTER CALCULATION UNIT, BARYCENTER OF PLURALITY OF PARAMETERS CORRESPONDING TO REPLICA STATE SPECIFIED IN S31  ~S32

CAUSE, BY BARYCENTER CALCULATION UNIT, BARYCENTER HOLDING UNIT TO HOLD BARYCENTER INFORMATION INDICATING BARYCENTER CALCULATED IN S32  ~S33

S34

HAVE ALL REPLICA STATES BEEN SPECIFIED?  NO

YES

END

# FIG. 8

```
        DETAILS OF S23
     (BARYCENTER DISTANCE
     DETERMINATION UNIT)
```

                                                              (A2)

SPECIFY, BY BARYCENTER DISTANCE DETERMINATION
UNIT, ONE OF REPLICA STATES                          ~S41

SPECIFY, BY BARYCENTER DISTANCE DETERMINATION
UNIT, CURRENT TEMPERATURE CORRESPONDING TO          ~S42
REPLICA STATE SPECIFIED IN S41

DETERMINE, BY BARYCENTER DISTANCE DETERMINATION
UNIT, WHETHER OR NOT TEMPERATURE SPECIFIED IN S42   ~S43
IS EQUAL TO OR LOWER THAN PREDETERMINED
TEMPERATURE

S44
EQUAL TO OR
LOWER THAN PREDETERMINED                              NO
TEMPERATURE?

YES

CAUSE, BY BARYCENTER DISTANCE DETERMINATION UNIT,
LOW-TEMPERATURE INFORMATION HOLDING UNIT TO
HOLD LOW-TEMPERATURE INFORMATION INDICATING         ~S45
THAT REPLICA STATE SPECIFIED IN S41 IS LOW
TEMPERATURE

S46
HAVE ALL REPLICA                                     NO
STATES BEEN SPECIFIED?                              (A2)

YES

(A1)

# FIG. 9

(A1)

(A3)

SPECIFY, BY BARYCENTER DISTANCE DETERMINATION UNIT, ONE OF SETS OF REPLICA STATES FOR WHICH LOW-TEMPERATURE INFORMATION HOLDING UNIT HOLDS LOW-TEMPERATURE INFORMATION INDICATING TO BE LOW TEMPERATURE ～S51

CALCULATE, BY BARYCENTER DISTANCE DETERMINATION UNIT, DISTANCE OF BARYCENTER CORRESPONDING TO SET SPECIFIED IN S51 ～S52

DETERMINE, BY BARYCENTER DISTANCE DETERMINATION UNIT, WHETHER OR NOT DISTANCE CALCULATED IN S52 IS WITHIN PREDETERMINED DISTANCE ～S53

S54

WITHIN PREDETERMINED DISTANCE? —— NO

YES

CAUSE, BY BARYCENTER DISTANCE DETERMINATION UNIT, ADJUSTMENT INFORMATION HOLDING UNIT TO HOLD ADJUSTMENT INFORMATION INDICATING THAT SET OF REPLICA STATES SPECIFIED IN S52 IS TEMPERATURE ADJUSTMENT TARGET ～S55

S56

HAVE ALL SETS BEEN SPECIFIED? —— NO —— (A3)

YES

END

# FIG. 10

DETAILS OF S24
(TEMPERATURE ADJUSTMENT UNIT)

B1

SPECIFY, BY TEMPERATURE ADJUSTMENT UNIT, ONE OF SETS OF REPLICA STATES FOR WHICH ADJUSTMENT INFORMATION HOLDING UNIT HOLDS ADJUSTMENT INFORMATION INDICATING TO BE TEMPERATURE ADJUSTMENT TARGET ～S61

SPECIFY, BY TEMPERATURE ADJUSTMENT UNIT, REPLICA STATE CORRESPONDING TO TEMPERATURE OTHER THAN LOWEST TEMPERATURE AMONG REPLICA STATES CORRESPONDING TO SET SPECIFIED IN S61 ～S62

UPDATE, BY TEMPERATURE ADJUSTMENT UNIT, CORRESPONDENCE INFORMATION SO THAT TEMPERATURE CORRESPONDING TO REPLICA STATE SPECIFIED IN S62 EXCEEDS PREDETERMINED TEMPERATURE ～S63

CAUSE, BY TEMPERATURE ADJUSTMENT UNIT, CORRESPONDENCE INFORMATION HOLDING UNIT TO HOLD CORRESPONDENCE INFORMATION UPDATED IN S63 ～S64

S65
HAVE ALL SETS BEEN SPECIFIED? NO → B1

YES

END

# FIG. 11

```
    ┌─────────────────────────────────┐
    │      DETAILS OF S25             │
    │ (EXCHANGE OPERATION UNIT AND    │
    │    OUTPUT CONTROL UNIT)         │
    └─────────────────────────────────┘
```

SPECIFY, BY EXCHANGE OPERATION UNIT, TWO ANNEALING UNITS THAT ARE CANDIDATES FOR EXCHANGING TEMPERATURES ~S71

CALCULATE, BY EXCHANGE OPERATION UNIT, EXCHANGE PROBABILITY OF TEMPERATURE CORRESPONDING TO REPLICA STATE OF EACH ANNEALING UNIT, FROM TEMPERATURE AND ENERGY CORRESPONDING TO TWO ANNEALING UNITS SPECIFIED IN S71 ~S72

DETERMINE, BY EXCHANGE OPERATION UNIT, WHETHER OR NOT TO EXECUTE EXCHANGE OF TEMPERATURES CORRESPONDING TO REPLICA STATES OF TWO ANNEALING UNITS SPECIFIED IN S71, ON BASIS OF COMPARISON RESULT BETWEEN EXCHANGE PROBABILITY CALCULATED IN S72 AND RANDOM NUMBER ~S73

ARE TEMPERATURES TO BE EXCHANGED? S74    NO

YES

EXCHANGE, BY EXCHANGE OPERATION UNIT, INFORMATION INDICATING TEMPERATURES OF TWO ANNEALING UNITS SPECIFIED IN S71 IN CORRESPONDENCE INFORMATION HELD BY CORRESPONDENCE INFORMATION HOLDING UNIT ~S75

GIVE, BY OUTPUT CONTROL UNIT TO EACH ANNEALING UNIT, TEMPERATURE CORRESPONDING TO REPLICA STATE OF EACH ANNEALING UNIT ~S76

END

# FIG. 12

DETAILS OF S24
(TEMPERATURE ADJUSTMENT UNIT)

SPECIFY, BY TEMPERATURE ADJUSTMENT UNIT, ONE OF SETS OF REPLICA STATES FOR WHICH ADJUSTMENT INFORMATION HOLDING UNIT HOLDS ADJUSTMENT INFORMATION INDICATING TO BE TEMPERATURE ADJUSTMENT TARGET ~S81

SPECIFY, BY TEMPERATURE ADJUSTMENT UNIT, REPLICA STATE CORRESPONDING TO TEMPERATURE OTHER THAN LOWEST TEMPERATURE AMONG REPLICA STATES CORRESPONDING TO SET SPECIFIED IN S81 ~S82

S83
HAVE ALL SETS BEEN SPECIFIED? NO

YES

END

# FIG. 13

DETAILS OF S25
(EXCHANGE OPERATION UNIT AND
OUTPUT CONTROL UNIT)

SPECIFY, BY EXCHANGE OPERATION UNIT, ONE OF REPLICA STATES SPECIFIED IN S82 — S91

EXCHANGE, BY EXCHANGE OPERATION UNIT, IN CORRESPONDENCE INFORMATION HELD BY CORRESPONDENCE INFORMATION HOLDING UNIT, INFORMATION INDICATING TEMPERATURE OF REPLICA STATE SPECIFIED IN S91 WITH INFORMATION INDICATING TEMPERATURE CORRESPONDING TO REPLICA STATE OF ANNEALING UNIT CORRESPONDING TO HIGHEST TEMPERATURE — S92

HAVE ALL REPLICA STATES BEEN SPECIFIED? — S93 — NO

YES

GIVE, BY OUTPUT CONTROL UNIT TO EACH ANNEALING UNIT, TEMPERATURE CORRESPONDING TO REPLICA STATE OF EACH ANNEALING UNIT — S94

END

# FIG. 14

| ITERATION NUMBER | REPLICA NUMBER | VARIABLE 1 | VARIABLE 2 | VARIABLE 3 | VARIABLE 4 | VARIABLE 5 | TEMPERATURE | ENERGY |
|---|---|---|---|---|---|---|---|---|
| 1 | RP1 | 1 | 1 | 1 | 0 | 1 | 0.2 | 100000 |
| 1 | RP2 | 1 | 1 | 1 | 0 | 0 | 1.3 | 100000 |
| 1 | RP3 | 1 | 0 | 1 | 0 | 0 | 9.8 | 100000 |
| 1 | RP4 | 0 | 1 | 1 | 0 | 0 | 4.4 | 100000 |
| 1 | RP5 | 0 | 0 | 1 | 0 | 0 | 7.0 | 100000 |
| 2 | RP1 | 0 | 0 | 1 | 0 | 1 | 0.2 | 5000 |
| 2 | RP2 | 1 | 1 | 1 | 0 | 0 | 1.3 | 82000 |
| 2 | RP3 | 0 | 0 | 1 | 0 | 0 | 9.6 | 18000 |
| 2 | RP4 | 1 | 0 | 1 | 0 | 0 | 4.0 | 45000 |
| 2 | RP5 | 1 | 0 | 1 | 0 | 1 | 7.0 | 31000 |
| ... | ... | ... | ... | ... | ... | ... | ... | ... |

FIG. 15

| REPLICA NUMBER | VARIABLE 1 | VARIABLE 2 | VARIABLE 3 | VARIABLE 4 | VARIABLE 5 |
|---|---|---|---|---|---|
| RP1 | 0.21 | 0.63 | 0.99 | 0.02 | 0.32 |

...

# FIG. 16

| REPLICA NUMBER | VARIABLE 1 | VARIABLE 2 | VARIABLE 3 | VARIABLE 4 | VARIABLE 5 |
|---|---|---|---|---|---|
| RP1 | 0.21 | 0.63 | 0.99 | 0.02 | 0.32 |
| RP2 | 0.71 | 0.41 | 0.98 | 0.01 | 0.66 |
| RP3 | 0.82 | 0.62 | 0.95 | 0.01 | 0.52 |
| RP4 | 0.45 | 0.70 | 0.99 | 0.01 | 0.01 |
| RP5 | 0.48 | 0.66 | 0.98 | 0.02 | 0.01 |

# FIG. 17

| REPLICA NUMBER | DETERMINATION RESULT |
|---|---|
| RP1 | FALSE |
| RP2 | FALSE |
| RP3 | FALSE |
| RP4 | TRUE |
| RP5 | TRUE |

# FIG. 18

| REPLICA NUMBER (1) | REPLICA NUMBER (2) |
|--------------------|--------------------|
| RP4 | RP5 |

FIG. 19A

ENERGY

t1    t2    t3    t4  t5    NUMBER OF
ITERATIONS (TIME)

FIG. 19B

TEMPERATURE

t1    t2    t5    NUMBER OF
ITERATIONS (TIME)

Europäisches
Patentamt

European
Patent Office

Office européen
des brevets

# EUROPEAN SEARCH REPORT

Application Number

EP 20 16 3831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 465231 B1 (FUJITSU LTD) 6 February 2019 (2019-02-06) * paragraphs [0035] - [0067]; figures 1, 5 * | 1-8 | INV. G05B13/04 G06F17/11 G06N5/00 |
| X | US 2018/107172 A1 (TAKATSU MOTOMU [JP]) 19 April 2018 (2018-04-19) * paragraphs [0146] - [0162]; claim 1; figure 13 * | 1-8 | |
| A | HAMDENI CHAMSEDDINE ET AL: "Barycenter-Based Placement Strategy Towards Improving Replicas Distribution Quality", 18 October 2016 (2016-10-18), PERVASIVE: INTERNATIONAL CONFERENCE ON PERVASIVE COMPUTING; [LECTURE NOTES IN COMPUTER SCIENCE; LECT.NOTES COMPUTER], SPRINGER, BERLIN, HEIDELBERG, PAGE(S) 570 - 586, XP047363319, ISBN: 978-3-642-17318-9 [retrieved on 2016-10-18] * 1. Introduction and motivation 3. New placement strategy * | 1-8 | **TECHNICAL FIELDS SEARCHED (IPC)**<br><br>G05B G06F G06N |

The present search report has been drawn up for all claims

| Place of search | Date of completion of the search | Examiner |
|---|---|---|
| The Hague | 2 September 2020 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 3831

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2020

| Patent document cited in search report | | Publication date | Patent family member(s) | | Publication date |
|---|---|---|---|---|---|
| JP 6465231 | B1 | 06-02-2019 | JP<br>JP<br>US | 6465231 B1<br>2019159637 A<br>2019278829 A1 | 06-02-2019<br>19-09-2019<br>12-09-2019 |
| US 2018107172 | A1 | 19-04-2018 | JP<br>JP<br>US | 6465092 B2<br>2018063626 A<br>2018107172 A1 | 06-02-2019<br>19-04-2018<br>19-04-2018 |

EPO FORM P0459

For more details about this annex : see Official Journal of the European Patent Office, No. 12/82

**REFERENCES CITED IN THE DESCRIPTION**

**Patent documents cited in the description**

- JP 2004244721 A
- JP 2002217902 A
- JP 2016519857 A